# EUROPEAN PATENT APPLICATION

(11) **EP 4 194 154 A1**
(43) Date of publication of application: **14.06.2023**
(21) Application number: 22211297.1
(22) Date of filing: 05.12.2022
(51) Int. Cl.: B25J 9/16, B25J 9/22, G05B 19/42

(54) **ROBOT PROGRAMMING SYSTEM**

(30) Priority: 07.12.2021 EP 21383115
(71) Applicant: Fundación AITIIP, 50720 Zaragoza (ES)
(72) Inventor: DIESTE MARCIAL, José Antonio, E-50720 Zaragoza (ES); GONZALVO BAS, Berta, E-50720 Zaragoza (ES); GRACIA ARANEGA, Pascual, E-50720 Zaragoza (ES); LAGUÍA PÉREZ, Alberto, E-50720 Zaragoza (ES); MONZÓN CATALÁN, Iván, E-50720 Zaragoza (ES); MARQUÉS PAOLA, Alejandro, E-50720 Zaragoza (ES)
(74) Representative: ABG Intellectual Property Law, S.L.

(57) **Abstract**

The present invention belongs to the field of industrial robots, in particular of automatic programming of industrial robots by means of an industrial programming system. The present invention also relates to a method of industrial robot programming by means of the aforementioned industrial programming system. The present invention is also related to a computer program which carries out the method for the industrial programming.

## Description

### FIELD OF THE INVENTION

The present invention belongs to the field of industrial robots, in particular of automatic programming of industrial robots by means of an industrial programming system.

The present invention also relates to a method of industrial robot programming by means of the aforementioned industrial programming system.

The present invention is also related to a computer program which carries out the method for the industrial programming.

### PRIOR ART

Currently, industrial robots are systems which provide advanced tools or devices, operated by means of software, which achieve flexibility and adaptability of production. This is essential for enterprises of all sizes to survive in global competition. Thus, industrial robots are seen as a key element in flexible manufacturing systems.

However, the handling of such industrial robots is complicated because of several drawbacks, such as their complex handling or the time-consuming programming which requires a remarkable amount of expertise and can be justified economically only for the production of large lot sizes.

Indeed, the level of accuracy reached by the existing tracking methods is not compatible with the precision required by advanced manufacturing systems which make use of such an industrial robot.

Finally, the overall controlling software is particular for each industrial robot, and often cannot be accessed by the user, which is then biased to the programming functions provided by the user manufacturer. This is not ideal if tweaks are required to adapt it to changing requirements, particularly for including advanced, not yet encoded, manufacturing methods for additional products, especially when single part production is going to be done.

Currently, there are two well-known methods of robot programming:
- Online programming, including lead-through and walk-through: this manual online programming requires no additional hardware and software other than those to be used for the manufacturing process, but the generated program is not flexible and can only handle simple robot paths.
- Offline programming (OLP): the present method can generate flexible robot programs for complex robot paths, but their high cost can only be justified for a large production volumes. Additionally, programming a robotic system using typical commercially available OLP software is still a manual process.

Notwithstanding this, OLP shifts the burden of robot programming from the robot operators jogging robot manipulator in the workshop to the software engineers, who 'jog' a simulated robot in a computer-modelled environment.

OLP provides advantages such as reusable code, flexibility for modification, and less system downtime during programming stage. However, the time and cost required to generate code for a complex robotic system using OLP is expected to be similar to if not more than that using online programming.

Because of this, currently, for a complex manufacturing process with small to average production volume, very few robotic automation solutions are used to replace manual production due to this expensive and time-consuming programming overhead.

Additional recent specific solutions have been developed, which provide additional advantages over the aforementioned methods:
- ABB Lead Through robot programming system, to drive an end effector through a series of points along a desired path with respect to a workstation, representing the position and orientation of the end effector.
- Valk Welding 'off-site teaching' tool programming a work piece for the welding robot outside of the welding robot. With the present method, the manual welder can get down to work straight away, without a drawing.

Document WO 2011/039542 A1 discloses a method and system for programming a robot for automating a skilled manual process.

The patent application CN 110 039 523 A discloses an industrial robot vision's servosystem for path planning in a welding automated system, which comprises infrared laser positioning.

However, the present systems and methods produce high resolution acquisition that is still not sufficient for welding or AM operations, requiring an accuracy ≤ 0.2 mm. Such accuracy can be provided by these tracking systems, which lack the ability to define the geometries of the components and therefore require a preliminary programming of the robot along the nominal weld path. This operation can be very complex in the case of three-dimensional and non-linear paths.

Moreover, such systems generally lose precision in the presence of metal and/or reflective surfaces, because of the generation of ghost images.

Therefore, there are no known products that complement the functionalities of the two abovementioned systems (smart camera and seam tracking), while is widespread a highly complex mathematical approach that requires accurate calibration of the acquisition system. Moreover, such system developments results highly expensive for its use in industrial manufacturing.

### DESCRIPTION OF THE INVENTION

The present invention provides a solution for the aforementioned problems, by an industrial robot programming system according to claim 1, a method for the programming of an industrial robot programming system according to claim 11, a computer program according to claim 22 and a computer-readable data carrier according to claim 23. In dependent claims, preferred embodiments of the invention are defined.

In a first inventive aspect, the invention provides an industrial robot programming system for the programming of an industrial robot, characterized in that it comprises:
- a dummy device, configured as a real tool to be handled by a user in an operative mode, i.e., performing a simulation of one or more real operations that would be executed during a manufacturing process;
- at least one sensor, configured for collecting data of the position and/or the orientation of the dummy device in a scene;
- a processor in communication with the at least one sensor and with the storage means;
wherein the processor is configured to read collected data of the at least one sensor while the dummy device is handled by the user and to store it in the storage means; and wherein the processor is configured to perform the following steps:
a) collecting a time frame record comprising the position and/or orientation from the at least one sensor of the dummy device in a starting position during the operative mode,
b) collecting data of a set of time frame position and/or orientation records from the at least one sensor of the dummy device according to a path of the dummy device for a pre-specified period of time,
c) programming the industrial robot by means of the collected data.

In the context of this invention, a "dummy tool" or equivalently a "dummy device" would refer to a non-functional tool but substantially identical to a "real tool" or "real device" (fully functional tool) in shape and which, from the operational and handling perspective, similar to a real tool for its use by a user. In some embodiments, the dummy device is configured to be actuated by a user in the same way as a real tool, for instance, via a trigger, button or commands. As an example, if the real tool is a welding torch, the dummy device would be a torch mimicking the real welding torch from the operational perspective (i.e., the user uses both of them in the same way, pressing the same buttons or providing the same commands) but certain elements, either dangerous or expensive, are missing (e.g., the electric arc or the welding power supply if the dummy tool mimics a welding torch, or the paint depot if the dummy tool corresponds to a simulated paintbrush). In specific embodiments, the dummy tool is manufactured by means of 3D additive printing (e.g., by using polylactic acid, Nylon, thermoplastic elastomer, etc.), which lowers the costs and provides for a reduced weight of the dummy device.

Throughout all this document, an "operative mode" will be understood as the mode in which the whole industrial programming system performs the simulation of several operations for achieving a particular result while the operations are captured in order to determine the operations that the real tool will carry out during the manufacturing process. The term "operations" will be interpreted as those actions carried out by the real tool or the dummy tool if they are simultated, at least comprising the movement defined at least by the trajectory of the tool and, optionally by the orientation of the tool. Further optional actions of the operations are triggering events, or actions executed by the assistance of buttons or triggers. The operative mode does not imply actually performing the real manufacturing process, but a simulation thereof. In a particular embodiment, such simulated operations are related with the welding of several parts by means of any welding process, as well as with any coupling process or manufacturing process. In other embodiments, the simulated operations of the operative mode involve cutting, mechanizing or other industrial manufacturing processes such as cutting, joining, coating, welding, deburring, milling, grinding, polishing, milling, drilling, mounting or painting. Thus, the operative mode comprises the simulation of any required procedure which is to be performed by a real industrial robot in the industrial environment which allows achieving any manufacturing process. In particular, the required procedures comprise movements of the dummy tool that must be captured and reproduced later when the industrial process is carried out by an industrial robot. The dummy tool movements are defined by a path of a reference point of the dummy device and the orientation adopted by the dummy device. The dummy tool movements learned during the operative mode serve as a training. Then, said movements are suitable for being reproduced by the industrial robot during a manufacturing mode, in which said industrial robot performs the real manufacturing process (like cutting, joining, coiting, etc.) with a real tool.

In the context of the present invention, the "scene" would refer to a scenario in which the operation with the dummy device takes place, like an industrial plant or a room. The scene comprises at least a fixed calibration reference (further referred to "second reference means", like a static object or point in the scene) which serves to establish a position reference for the trajectory and orientation of the dummy device. Preferably, the scene could be recorded by an imaging acquisition means (as it will be explained later) and said second reference means must be present, at least, in an image recorded by said imaging acquisition means. One of the main objectives of the system of the invention is to provide the position and/or the orientation of the dummy device with regard to said second reference means during the entire manufacturing or industrial process.

The system of the invention comprises a dummy device. Such a dummy device refers to a non-functional device which is handled by a user (either a human or robotic user) in the same way as a real tool would be handled in an industrial or manufacturing process during real manufacturing mode. Advantageously, such a system provides guided programming of industrial or manufacturing processes such as welding, deburring, milling, grinding, polishing, milling, drilling, mounting or painting. Throughout this description, an "industrial" or "manufacturing" process would be understood in the broad sense, comprising any process performed by industrial machinery in any type of industry (automotive, construction, metal production, mining, agriculture, chemical, etc.), especially when repetitive actions need to be executed. In a similar way, an "industrial robot" programmed by the system of the invention can be any electromechanic device or machinery of any of this industries (e.g., a robotic arm, etc.).

The collected data are structured as "time frame records", such that each record comprises information about the position and/or orientation of at least one sensor of the dummy device. The time information can be labelled as a timestamp or the like. In this way, firstly the collected data only refer to information about a starting position of the dummy device. However, when the user operates over the dummy device during a pre-specified period of time (for instance, in an operative mode), said dummy devices travels a certain path and, for each point of said path, a record is collected.

In a particular embodiment, a sequence of time frame records obtained by means of the sampled location points and/or orientations of the device, defines a relevant "path", thus the path being obtained from the sampling of the at least one sensor, capturing the data coming from the device. This path is representative of the operation of the user during the operative mode.

Preferably, the invention according to another embodiment is intended to optimize the trajectories or as an automated trajectory planner in an industrial environment. For instance, the invention is able to collect data of the orientation/position of the dummy device while performing a certain industrial task, store said data and process them to optimize the trajectory (either simplifying it or adjusting it depending on the resolution to be achieved in the industrial process); and finally, using the optimized trajectory to program an industrial robot. In this way, the collected data define a trajectory suitable for the industrial robot.

In the context of this invention, to program the industrial robot must be interpreted as uploading or transferring a set of instructions to said industrial robot, such that the industrial robot reproduces the trajectory defined by the collected data or, by the any optimized data. In this way, once the industrial robot receives the instructions, it enters into the manufacturing mode, in which it reproduces the trajectory that it has been instructed to. The transfer of instructions to program the industrial robot, according an embodiment is carried out wirelessly or, alternatively, by transferring the instructions using a data connector (USB cable or the like). Furthermore, in certain embodiments, the instructions can be stored in the storage means of the system according to a preferred embodiment of the present invention before being transferred to the industrial robot.

Said device, embodied as a dummy tool, is not necessarily directly coupled with any additional element but to the user which is performing the manufacturing process by means of such device. The dummy tool comprises at least a reference location which a characteristic point that serves as a positioning and/orientation reference. For instance, in an embodiment of the dummy tool, the at least reference location is a tip of said dummy tool; whereas in other embodiments the reference location is the centroid of physical targets of the dummy tool. In this way, when it comes to computing the trajectory/path traveled by the dummy tool during an operation (e.g., a manufacturing process) performed by the user within a scene, at least the three-dimensional position of the tip is tracked with regard to a fixed calibration reference (second reference means) of the scene.

Advantageously, tracking at least a reference location of the dummy tool allows monitoring the industrial manufacturing process (like welding, painting, etc.) with high accuracy, as the actuation/operation of the user is represented by the variation of the position of said reference location of the dummy tool within the scene during the manufacturing process. For instance, if the manufacturing process involves painting the body of a vehicle, the collection of the position data of the tip during the entire process would provide useful information to monitor the procedure. In some specific processes the residence time of the tool in a certain position or the velocity of tool movement are important aspects to be captured from the dummy tool movement.

As an example, when dealing with a welding process, the user handles a dummy welding tool and performs a simulation of the welding of two or more parts during operative mode by means of the dummy welding tool. In the present system, the dummy device corresponds with a reproduction of a real welding tool and the operative mode would comprise the movements of the dummy tool simulating those welding tool movements which must be carried out by the real welding tool during the real welding process.

Advantageously, the use of the dummy tool and mimicking the operation of a real tool used in a real manufacturing process avoids the user to perform the real manufacturing process, and thus enhances safety of the user which reproduces the manufacturing process without the need of really performing it.

Such a manufacturing process is performed by the system of the first inventive aspect, which avoids any injuries to the users as well as removing the need of use of complicated individual protection equipment for such user, due to the fact that the manufacturing process is performed by the system of the first inventive aspect itself.

That is, the present industrial programming system provides a collaborative robotics, for large robots and manufacturing processes that are not very ergonomic or that present potential health problems, and is able to be customized for every industrial process need.

In a particular embodiment, the dummy device or dummy tool can be a reproduction of the tool required by the user in the manufacturing process, with a reduced weight or complexity. Advantageously, providing a dummy tool which is an exact reproduction of a real one allows the user to perform exactly the same movements and/or events as performed in a real manufacturing process. This enhances the efficiency of the system and the collected data, which can be afterwards reproduced by an industrial robot. Moreover, this dummy tool enables that the calibration of the industrial robot takes place without wasting resources (welding material, paint, etc.).

The industrial robot programming system comprises at least one sensor. Such at least one sensor can be located on the dummy device, in order to be able to provide data of its position and/or orientation, or in a different point of the system which allows the recognition of such position and/or orientation of the dummy device.

Therefore, the system is able to locate, by means of the at least one sensor, the exact position and orientation of the dummy device within the scene, handled by the user, during the whole manufacturing process. That is, when the dummy device is in its operative mode, i.e. performing a simulation of a manufacturing or an industrial process, the at least one sensor provided at the dummy device is able to locate the position and/or orientation required for the dummy device to work.

The sensor thus performs a collection of data of the position and/or orientation of the different movements performed by the user on the dummy device during the simulated manufacturing process which corresponds with the operative mode. For instance, if the dummy device operates as a cutting device with a sharpened tip, then by tracking the position of the tip and collecting said data, the industrial process can be optimized and automated later by refining the trajectory travelled by the dummy device. Advantageously, this feature of the system allows its use for training and programming an industrial robotic system.

Such collected data, taken by means of at least one sensor, according to an embodiment is derived to the storage means by the processor, thus being sequentially stored according to the simulated manufacturing process reproduced by the dummy device, when handled by the user.

In some embodiments, the sensor is an optical sensor (not limited to work in the visible range, but also in infrared, ultraviolet, or other frequency band).

In a particular embodiment, the dummy device comprises a sensor at every relevant scene position which provides information of the simulated manufacturing process, such as reference locations of the dummy tool which perform relevant movements, or specific locations of buttons, activation handles, etc. For example, in a simulated welding procedure, a welding tool may comprise additional sensors in the handle, the tip and/or the activation buttons in order to collect data of the position of the dummy tool, the inclination of the tip, its orientation and the time frames in which said dummy tool is activated by means of a button.

In a particular embodiment, the dummy device comprises a support portion which helps the user to maintain the tool in its proper position, as well as carrying its weight when necessary.

In a particular embodiment, the processor is configured to collect data from the at least one sensor at a predetermined time frequency. Advantageously, this provides of collected data of several relevant instants (time frames). In a further embodiment, such data collection allows to acquire 3D spatial positions of the dummy device with constant increments of time, and in the same way said increment will be parameterizable. Therefore, with such a data collection based on relevant time instants and spatial points, the movement speed or acceleration of the dummy device can be determined.

In a particular embodiment of the industrial robot programming system, the processor is further adapted to receive at least one event while collecting data in step b) and wherein the collected data are enriched with the record of the event, in particular triggering events caused by the user operating on an activation trigger and/or one or more buttons.

In a particular embodiment, the dummy device comprises 3 to 6 degrees of freedom.

In a particular embodiment, the processor is further configured to read an event occurred during the simulated operation (like the actuation of the user on a certain activation trigger and/or one or more buttons of the dummy tool) and to store it in the storage means.

Such an event corresponds to any relevant milestone of a simulated manufacturing process, i.e. the activation and/or deactivation of the dummy device, a stop during the operative mode or a particular movement of the dummy device.

Advantageously, the identification and storage of several events which occur during the manufacturing process provides a more accurate programming of the manufacturing process.

In another embodiment, the processor is configured to collect the data in real time.

In a particular embodiment, the processor is configured to collect the data in real time. Advantageously this provides a reproduction of the device and of the system during the operative mode which corresponds to a simulation of a real manufacturing process, that is, the complete geometric information (position, orientation, etc.) of the dummy device during the manufacturing process is achieved.

The collection of data in real time thus allows the simulation of a manufacturing process under real circumstances which provides of an accurate and efficient learning process, "learning" in the sense of collecting data and determining the processes to be implemented in a robot in a manufacturing system, in particular the trajectories with the appropriate orientations to be adopted.

In a particular embodiment, the processor is further configured to process the collected data. Advantageously, this provides an enhanced collection and storage of the collected data, which further provides a more accurate simulation of the manufacturing process.

In a preferred embodiment, the system further comprises filters which reduce the perturbances and/or the collected data.

Advantageously, in some embodiments, these filters serve for removing artifacts from the collected data of the at least one sensor, like environmental vibrations or the possible tremor that the user may have at the time of data collection. In this way, the use of these filters enhances the accuracy of the sensors for the collection of data, as well as it provides a greater robustness against small unwanted movements. In other embodiments, the filters serve for reducing the number of collected data. In this way, the industrial robot benefits from the optimized trajectory computed by the industrial programming system according to the invention; namely, with a reduced number of points and with a lower complexity, thus it requires less storage memory and can be processed more efficiently.

In a preferred embodiment of the system, the at least one sensor of the dummy device comprises first reference means disposed on a marked area of the dummy device.

Throughout this document, the "first reference means" would be understood as visual means placed in the dummy tool and which are designed to be recognized by a sensor. As particular examples, the first reference means comprise 3D physical targets for artificial vision tracking or fiducial markers.

In other embodiment, the system further comprises at least one second reference means in a fixed position in the scene.

Throughout this document, the "second reference means" would be understood as visual means placed in the scene (and not in the dummy tool). The second reference means are also designed to be easily recognized by a part of a sensor, for instance a camera with a tracking system, and serves to establish a spatial reference for measuring distances and position of different objects in the scene. This second reference is relevant when calibrating the system.

In this way, the first and second reference means are elements embodied as reference marks and/or as solid reference elements or a combination thereof, which provide the sensor with the mentioned reference for identifying the required position/orientation.

In other embodiment, the system further comprises a plurality of cameras, each of said cameras being configured to acquire a plurality of images of the scene from a different point of view; said images comprising one or more of the first reference means and/or the second reference means; and wherein the cameras are synchronized by the processor.

Advantageously, by acquiring images of the scene in which the reference means are visible, the tracking of the dummy tool can be performed. The image acquisition means are "synchronized" insofar as all of them, collect images of different points of view of the scene at the same time frame.

In a particular embodiment, the cameras performs the reading of several reference means, either disposed on a reference/marked area of the dummy device (first reference means) and/or relevant points of the scene (second reference means) or in the path travelled by the dummy device.

Advantageously, this provides points in which the at least one sensor performs the collection of data. Such reference means provide a particular point/instant in which the collection of data of the position/orientation of the device is required.

In other embodiment, the first reference means of the system comprise one or more fiducial markers.

In the context of the present invention, the term "fiducial markers" would be understood as any visible object or marker placed within the field of view of the scene acquired by the imaging acquisition means which serves for defining a reference and measurement point in a scene. In this way, the fiducial markers can be applied for measuring distances in the scene, as they comprise information for identifying the positioning and/or orientation of said fiducial markers with regard to the scene. Examples of fiducial markers are an object placed into the scene, or a set of marks in the reticle of an optical instrument used to collect images of said scene.

In an even more preferred embodiment, the fiducial markers are binary square fiducial markers, and more preferably, ArUco Markers.

Some non-limiting examples of fiducial markers suitable for the deployment of the present invention are QR codes, barcodes, etc. In a preferred embodiment of the present invention, the fiducial markers are binary square fiducial markers, and more preferably, ArUco markers. ArUco markers are synthetic markers comprising a black border and an inner binary matrix encoding an identifier. The black border facilitates a fast detection in the image while the binary matrix provides with a quick identification of the marker. The identifier may encode different information, in this case identifying the specific fiducial marker being captured.

According to this embodiment, when the frame is a square, the inner binary matrix allows, in addition to providing the identification, to determine the orientation of the square uniquely. The distorted view of the square in a captured image in the form of a four-sided polygon makes it possible to determine its position and orientation in space and, in this way, also the position and orientation of the dummy tool on which the fiducial marker is located.

According to specific embodiments, the black border also allows to determine the three-dimensional (3D) positioning and orientation of the fiducial marker and, therefore, also the three-dimensional positioning and orientation of the tool (e.g., 3D Cartesian coordinates X, Y and Z along with information about the rotation about said axes, further referred to as "rotX", "rotY" and "rotZ", respectively).

Advantageously, thanks to binary codification of information (e.g., position information) in the matrix of these markers, detection errors is easy and correction techniques may be applied in the event of errors.

In the scope of this invention, the 3D position would refer to positioning (X, Y, Z) information. On the other hand, 6 degree of freedom (DoF) information would comprise the 3D position information enriched with rotation information (rotX, rotY, rotZ). Although in this specification the coordinates refer to a Cartesian system, equivalent reference systems can be applied instead.

In some embodiments, the fiducial markers can be printed onto a surface of the dummy tool, like the handler.

In a particular embodiment of the system, the first reference means comprises at least three physical targets for artificial vision tracking located on the dummy device, and the cameras comprise at least two synchronized cameras configured for acquiring images of the scene from at least two different points of view. The condition of being synchronized boards should be interpreted as that they capture images at the same instant of time and therefore the information they show from different points of view correspond to the same position and orientation of the dummy tool, which allows their information to be combined.

In the scope of this invention, a 3D "physical target" would be understood as a feature or any element suitable for artificial vision (AV) tracking. For instance, the physical target can be an element of any geometrical shape (cube, sphere, etc.) or exhibiting a characteristic colour to ease its identification by means of AV algorithms.

Throughout this document, an "RBG camera/value" would be equivalent to a general "color camera/value". In this way, the color information may be encoded in red-bluegreen (RGB) space or other different color spaces (like HSL, representing Hue, Saturation and Lightness).

In another preferred embodiment, the first reference means comprises at least three physical targets for artificial vision tracking attached to the dummy device, and the imaging acquisition means comprise at least two synchronized cameras configured for acquiring images of the scene from at least two different points of view.

In a particular embodiment of the system, each of the at least three physical targets have a different RGB value allowing to identify each physical target, and wherein the cameras comprise at least two synchronized RGB cameras.

According to this embodiment, the identification of the three physical targets makes it possible to determine a reference point of each of them, for example their centroid. The color of each fiducial marker makes it possible to distinguish to which physical target each reference point is associated and, in this way, with the three identified points it is possible to orient the dummy tool to which they are engaged.

A second inventive aspect of the present invention refers to an industrial robot programming method for the programming of an industrial robot programming system, the system comprising:
- a dummy device, configured as a real tool to be handled by a user in an operative mode;
- at least one sensor, configured for collecting data of the position and/or the orientation of the dummy device in a scene;
- a processor in communication with the at least one sensor and with the storage means;
   wherein the method comprises the following steps:
   a) collecting a time frame record comprising the position and/or orientation from the at least one sensor of the dummy device in a starting position during the operative mode,
   b) collecting data of a set of time frame position and/or orientation records from the at least one sensor of the dummy device according to a path of the dummy tool for a pre-specified period of time,
   c) programming the industrial robot by means of the collected data. In a particular embodiment, the required operations and/or events performed in step
   b) with the device are a continuous tracking of the position and/or orientation of the device. Advantageously, this provides data from the device continuously along time and thus the required data for producing a determined path with the location and/or orientation of the device according to a determined manufacturing process.

In a particular embodiment, the collected data are stored in a predetermined database, thus enabling the storage of different manufacturing processes or steps.

In a particular embodiment, the method further comprises the step of storing in the storage means the processed data of step b).

In a preferred embodiment of the method, said method further comprises receiving at least one event while collecting data in step b) and wherein the collected data are enriched with the record of the event, in particular triggering events caused by the user operating on an activation trigger and/or one or more buttons.

In other embodiments of the method, in step b), the collected data are acquired by a continuous tracking of the position and/or orientation of the dummy device.

In a particular embodiment, the continuous tracking is a real time continuous tracking sampling the position and/orientation at predetermined time instants, for instance according to a sample rate. This provides the required data according to a real-time performance by the user of the determined manufacturing process, which is reproduced by means of the dummy device.

In other embodiments of the method the system further comprises plurality of cameras, each of said cameras being configured to acquire a plurality of images of the scene from a different point of view; said images comprising one or more of the first reference means and/or the second reference means; and wherein the cameras are synchronized by the processor.

According to an embodiment, the first reference means comprise one or more fiducial markers and, according to another embodiment the first reference means comprises at least three physical targets for artificial vision tracking located on the dummy device, and wherein the cameras comprise at least two synchronized cameras configured for acquiring images of the scene from at least two different points of view.

According to any of these two embodiments, collecting data comprises the realization of the following steps for each time frame:
- acquiring a plurality of images collected by the cameras synchronized to capture the images in the same time frame, the cameras adapted to capture the scene observed from different points of view and, the dummy tool located in the scene wherein at least one of the first reference means are within the field of view of at least one camera;
- detecting first reference means in at least one image;
- for each first reference means in each image, determining a reference location associated to the first reference means.

In a preferred embodiment of the method, that based on the use of physical targets:
- each camera of the set of cameras is adapted to capture an RGB image;
- the processor comprises a numerical model comprising information on the shape, color and location of one or more 3D physical targets, the theoretical shape of the contour of the 3D physical target when shown in an image and, the location of the 3D physical targets in respect to a reference of the dummy device;
wherein determining a reference location associated to the first reference means comprises:
- detecting RGB values of the physical targets shown in the image and determining the set of pixels associated to the said physical targets by performing a clustering of pixels corresponding to one RGB value of the numerical model,
- determining a contour for each physical target;
- for each physical target, locating the corresponding theoretical shape of the contour of the 3D physical target of the numerical model in the image in order to match with the contour determined in the previous step and;
- determining the reference location of each physical target as the centroid of the contour of the located theoretical shape of the contour of the 3D physical target in the image.

In the scope of the present invention, the "numerical model" of the dummy device would refer to a numerical representation of predetermined three-dimensional (3D) element used as a reference means and its properties, like shape, color, dimensions and/or contours (either fiducial markers or physical targets) comprised in said dummy device, position of one or more reference locations of the dummy device (e.g., a tip or an reference location of the dummy device). The numerical model of the dummy device also provides information about the distance among the different reference means (physical targets, fiducial markers, etc.) of said dummy device and also the distance between each of each reference means and, at least, a reference location of the dummy device. The numerical model is a representation appropriate for its storage and processing by the processor or other computerized means. In this way, the numerical model comprise information about all the reference means (first and second reference means) and the essential information about the dummy device.

In the scope of this invention, the "reference location" refers to a characteristic point of the reference means (either first or second reference means), which is used as a reference for describing at least its position. For instance, in certain embodiments of the invention involving fiducial markers or the physical targets, the reference location is a centroid of the reference frame or a centroid of a collected image of the physical target.

In a more preferred embodiment of the previous embodiment of the method, the orientation of the dummy device is determined by means of a triangulation algorithm using at least three different reference locations of the at least three 3D physical targets determined by at least two images of the same time frame.

In other embodiment of the method:
- the processor comprises a numerical model comprising information on the shape, location and orientation of one or more fiducial markers, in particular the shape, location and orientation of a reference frame of the fiducial marker, in respect to a reference location of the dummy device;
   and wherein determining the reference location associated to the first reference means comprises:
   i. detecting the reference frame of the fiducial marker;
   ii. identifying the fiducial marker associated to the reference frame;
   iii. for each fiducial marker, locating and transform the corresponding theoretical shape of the reference frame in the image in order to match with the detected reference frame of the fiducial marker in step i) and;
   iv. determining the reference location as the centroid of the contour of the reference frame in the image and the orientation responsive to the transformation of the theoretical shape of the reference frame.

Throughout this document, the "reference frame" of the fiducial marker would be understood as a contour or a box surrounding said fiducial marker and determining its outer shape. For instance, in some embodiments the reference frame is just a contour box encompassing the fiducial marker. As explained later, in some embodiments of the invention it is enough to detect the reference box of the fiducial marker and then, from said reference box, it is possible to compute a certain reference location representative of said fiducial marker. The orientation of the reference frame can also being determined from the fiducial marker since its content allows to identify the fiducial marker and also the orientation.

In other embodiments of the method, the reference location of one first reference means being estimated by two or more images is determined as a weighted average process wherein the weighting factors associated to reference locations with larger size of the first reference means shown in the image have higher values. That is, from each of the cameras where the first reference means appears, its position is estimated. The position will have different errors for the estimation obtained from each of the cameras. The position is calculated as the weighted average of the estimated positions, establishing a higher weight to those positions that are closer to the corresponding camera and where the markers appear with a larger size.

When multiple reference locations are found in an image, a different 6 DoF position of the dummy device is computed for each of them. In those cases, to derive a unique coordinate system (that is to say, a unique 6 DoF position) representative of the position and orientation of the dummy device, their contribution also needs to be averaged, in order to decrease the positioning and orientation error.

Advantageously, by considering multiple reference location (associated with different first reference means), occlusions can be effectively handled and avoided. Even in the case that an occlusion occur and some of the first reference means are not visible in any of the scene images acquired, the remaining first reference means which are visible enable the assessment positioning and orientation of the dummy tool. That is to say, the multiple reference location involve acquiring redundant information to overcome the problem of occlusion typical of object tracking.

In a preferred embodiment of the method, if the first reference means is a fiducial marker, then the weighting factor associated to reference locations with a reference frame less distorted in the image have higher values.

In the context of the present invention, the distortion (or transformation) in the image is measured by using any known shape-based matching algorithm, comparing the 3D numerical model of the reference means (ideal representation of the shape and color information) and how said reference means appear in the image. In this way, the matching algorithm assigns a weighting factor (also referred to as "score") depending on the similarity between the reference means image (e.g., a physical target image) and the ideal reference means (given by the 3D numerical model). Other suitable distortion measurements are cross-correlation, sum square difference or any known image descriptor known by the expert in the field (like scale-invariant feature transform, SIFT, etc.).

In an embodiment, the shape-based matching algorithm works as follows: the ideal 3D numerical model is iteratively transformed (translated, rotated, etc.) until it matches with the first reference means in a collected image. Once there is a match, said transformation (rotation, translation) is the one that has undergone the dummy tool. In this way, the method of the invention allows the assessment of the positioning and orientation of the dummy tool during a manufacturing process.

In some embodiments, the weighting factor (score) is normalized to the range 0-1, wherein 1 corresponds to a perfect matching between the collected image of the reference means and the ideal reference means according to the numerical model (perfect agreement between the reference means as collected in an image and the ideal reference means). However, the score can be assigned by other criteria predetermined by a skilled person. Note that the shape-based matching algorithm sensitive to the known 3D numerical model of the reference means, such that it is adapted to find the features of said numerical model (shape, color, etc.) in the acquired images of the scene.

For instance, let us consider that the same first reference means is acquired in two different images of the scene, being one of them much larger than the other one in the images. In that context, an embodiment of the method of the present invention would not assign a normalized score of 0.5 to each of them, because the larger first reference means would serve as a more accurate 6 DoF position. Correspondingly, from each of these first reference means, a possible 6 DoF position of the dummy tool can be derived. Then, both positions are averaged taking into account that the larger first reference means is more reliable than the smaller one. A possible weighting factor assignment would be 0.7 for the 6 DoF computed from the larger first reference means image and 0.3 for the other one.

Advantageously, in those embodiments of the dummy device wherein the fiducial markers are shaped as squares, the measurement of the distortion in the image with the method according to the second inventive step is easier, as this shape is easily distorted to become a rectangle or another parallelogram, therefore it is easy to compute which transformation (translation, rotation, etc.) has undergone.

According to another embodiment, the weighting factor depends on a non-decreasing monotonic function proportional to the distance between the camera and the observed element.

In a preferred embodiment of the method, the first reference means are physical targets and the weighted average determining the reference location reduces the weighting factor of reference locations determined in images where the first reference means are partially shown.

For instance, when some of the physical targets are not completely visible in the image, the weighting factor assigned to them is lower than if they are fully recovered. In this way, a defective acquisition of some of the physical targets does not negatively affect the accuracy in the assessment of position and orientation for the dummy tool.

In preferred embodiments, after the step b), the method further comprises the following steps for reducing the amount of collected data:
I.1) providing a list *Lᵢ*, *i* = 1 ... *n* of the collected data, wherein the list is sorted according to the acquisition order and wherein initially all points of the list are considered as not selected;
I.2) presetting of a threshold distance *dₜₕ*;
I.3) for each point *Lᵢ* of the list, and following the list order, carrying out the following steps iteratively:
   - assigning *Lᵢ* as a selected point;
   - for the points *j* = *i* + 2 and following,
      o determining a line *rⱼ* passing through the points *Lᵢ* y *Lⱼ*
      o for one or more list points *Lₖ* between *Lᵢ* y *Lⱼ*, namely *k* ∈ [*i* + 1, *j* - 1], computing a distance between *Lₖ* and *rⱼ*, wherein
         if the distance is below the threshold distance *dₜₕ*, discarding the point *Lₖ*; otherwise *Lₖ* is assigned as a selected point;
         until at least a point *Lₖ* is assigned as a selected point;
   - assigning *Lⱼ*, which is the end point of the updated line *rⱼ*, as a selected point;
   - updating the value of *i* as *i* = *j*;
I.4) returning a new list comprising the selected points sorted according to the acquisition order.

In some embodiments, the procedure of reducing the amount of collected data is carried out by the processor of the system according to the first inventive aspect.

Note that the new list comprising the selected points obtained with this last embodiment of the method define a simplified path (optimized trajectory) determined according to any of the previously disclosed embodiments for the dummy tool. In some cases, the original path may suffer from missing points (which have not been obtained from the data collected by the at least one sensor) or an excessive sampling (e.g., too many points because the user has interrupted the movement, etc.). In the event of excessive sampling, the previous method embodiment allows to discard points which, although being collected by the at least one sensor, are useless (e.g., no significant motion of the dummy tool happened). This data selection, by means of the defined points of the path, provide a more accurate stored movement and thus a more accurate manufacturing process performed by the device.

An excessive number of points can cause the robot, once programmed, to stop processing points and not advance along its path.

Advantageously, the purpose of this optimization algorithm carried out by the processor of the industrial robot system is to reduce the amount of collected data, with a minimum impact on the resolution of the system. As technical effects of this algorithm for reducing the amount of collected data, it is worth underlining the following:
- The optimized trajectories learned by the industrial robot are less prone to noise effects (perturbances in the environment, small artifacts, etc.). The selected points of these optimized trajectories are more representative and avoid redundant information.
- The optimized trajectory requires less storage means, which in turn simplifies the transfer of the instructions to the industrial robot which reproduces said trajectory.
- The optimized trajectory simplifies the procedure of updating the industrial robots, especially when the same industrial robot is used in different manufacturing processes.

As summary, the method according to the second inventive aspect provide, when performed by means of a system of the first inventive aspect, the programming of an industrial robot according to a particular manufacturing process, which may afterwards be reproduced in a repetitive manner.

That is, by means of a system according to the first inventive aspect, the user provides the relevant path and/or orientation of a dummy device, i.e. the tool required for the performance of such manufacturing method. Such data are collected and stored by the system, which thus enables a execution of the performed manufacturing process.

Such process may afterwards be reproduced by an industrial robot, following the stored movements and milestones of the procedure. This provides a robot learning system and method which allows the execution of several manufacturing processes, advantageously those which may be hazardous or difficult for a user and/or operator.

In a third inventive aspect, the invention provides a computer program comprising instructions which, when the program is executed by a computer, cause such computer to carry out the steps b) and/or c) of the method of the second inventive aspect.

Such a computer program provides the required software, achieved after the learning process performed by the system of the first inventive aspect, which allows the execution of the real manufacturing process with a real tool in a manufacturing mode, based on the learning of the dummy tool during the operative mode.

In a fourth inventive aspect, the invention provides a computer-readable data carrier having stored thereon the computer program of the third inventive aspect.

Advantageously, this provides a functional system for the reproduction of the sequential steps (path of the device) and/or milestones (any relevant aspect during the manufacturing process), thus achieving the required results without the presence of a user or operator.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other features and advantages of the invention will be seen more clearly from the following detailed description of a preferred embodiment provided only by way of illustrative and non-limiting example in reference to the attached drawings.
- Figures 1A-1C: These figures show, respectively, particular embodiments of the device of a system of the invention.
- Figure 1D: This figure shows the handling, by means of a user, of the device of any of figures 1A - 1C.
- Figure 2: This figure shows a schematic view of an embodiment of an industrial programing system according to the invention.
- Figure 3: This figure shows an embodiment of a manufacturing system programed by the industrial programming system of figure 2.
- Figures 4A-4C: These figures shows an embodiment of the dummy tool with fiducial markers according to the industrial programming system of the invention.
- Figure 5: This figure shows an embodiment of the dummy tool with four color physical targets according the invention.
- Figure 6: This figure shows four snapshots of the scene from different RGB cameras, in which the color physical targets have been recognized as part an embodiment of the method according to the present invention.
- Figures 7A-7H: These figures show a sequence of collected position data which are processed by the optimization algorithm to simplify the trajectory followed by the dummy device.
- Figure 8: This figure illustrates the result before (top image) and after (lower image) applying the optimization algorithm introduced in Figures 7A-7H over the collected trajectory data.

### DETAILED DESCRIPTION OF THE INVENTION

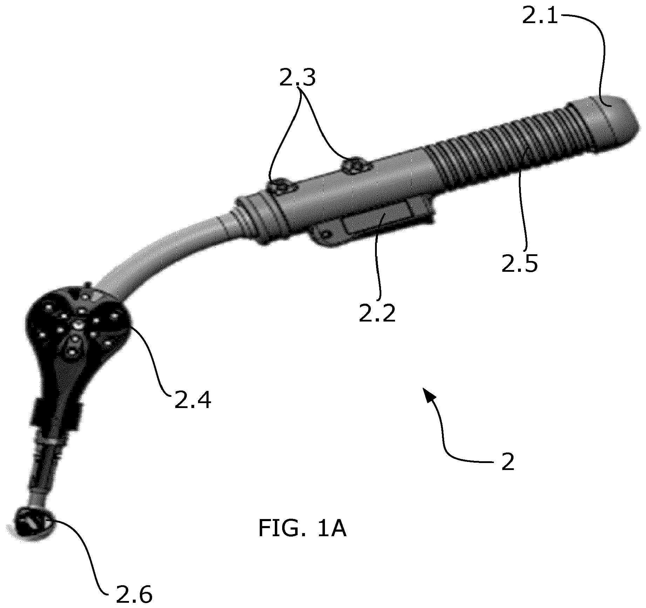

Figures 1A-1C show different embodiments of a dummy device (2), embodied as a tool, of an industrial robot programming system (1). Such a dummy device (2) is not a real tool, although has the same constructive features whilst having a reduced weight. In a particular embodiment, the dummy device (2) can be manufactured by additive manufacturing.

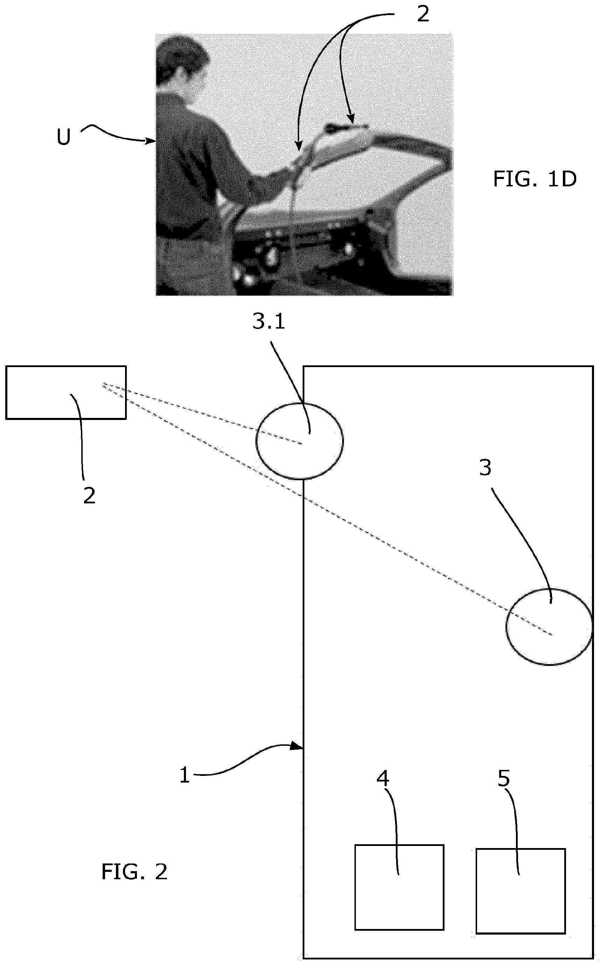

Particularly, the present dummy device (2) shown in figures 1A - 1C is a welding tool which can be handled by a user, as shown in figure 1D. Therefore, a user (U) as the one present in figure 1D is able to carry the dummy tool (2) in a real-manner simulation but is not able to actually use it.

A dummy device (2) as the one present in figures 1A - 1C may also be embodied mimicking a real tool and thus enable the user (U) to simulate, in a very realistic way, manufacturing operations with it.

The dummy device (2) shown in figures 1A - 1C is handled by means of a handle (2.1), which the user (U) can surround with a unique hand and carry backwards and forward, depending on the welding path which is to be followed during a simulated welding operation. Such a simulated welding operation provides the operative mode of the welding device (2) of figures 1A - 1C, as well as 1D. It may be noted that the user (U) may be human or a robotic device programmed to carry out an automated industrial procedure.

Figure 1A shows an activation trigger (2.2) located in the handle (2.1), actuated by the user (U) when the welding operation is to be performed. Such activation trigger (2.2) comprises two positions in the present embodiment, a first position for the activation of the welding tool and a second position for the deactivation of the welding tool (2).

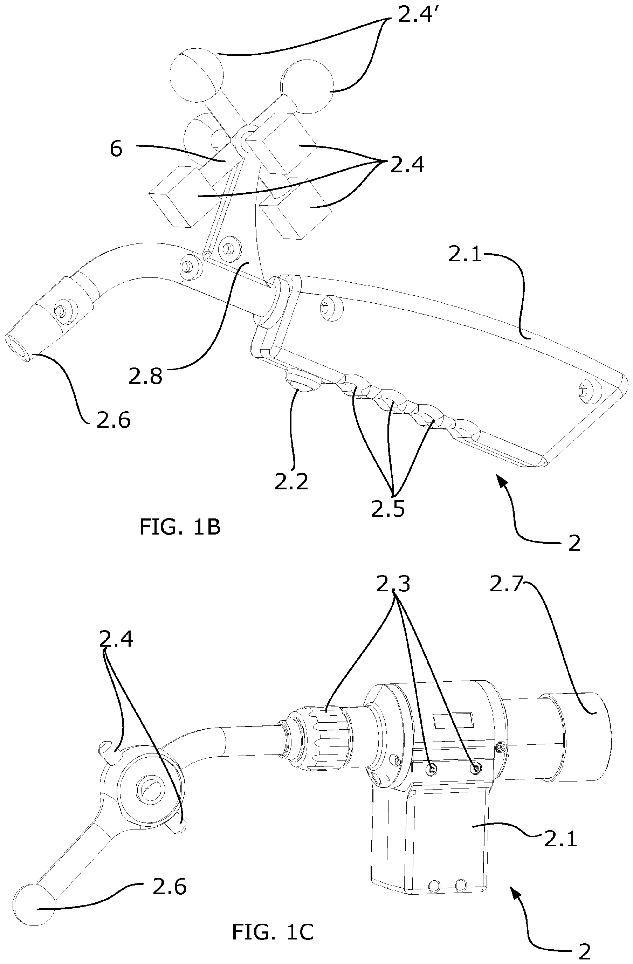

Figure 1B shows the activation trigger (2.2) embodied as a button which also comprises two different positions, the first position for the activation of the welding tool when the button is pressed and the second position for the deactivation of the welding dummy tool (2) when the button is not pressed.

Moreover, figures 1A and 1B show the handle (2.1) of the dummy device (2) further comprising a handling area (2.5) which enhances the grip to the hand of the user (U). Particularly, such handling area (2.5) in figure 1A is embodied as a splined section, whereas in figure 1B it is embodied as indentations wherein several fingers of a user can be supported in order to provide a better grip of the handle (2.1). Moreover, the dummy device (2) further comprises a tip (2.6).

The dummy device (2) also comprises a marked area, wherein first reference means (2.4, 2.4') are provided for the at least one sensor (3) of the industrial robot programming system (1) to read. Such reference means (2.4, 2.4') are located by means of the at least one sensor (3), and provide location and orientation data of the dummy device (2), measured by means of the predetermined distance measured at a certain direction at which the at least one sensor (3) is located.

These reference means of the marked area provide the location of different relevant points of the dummy device (2), as well as the orientation of the tip (2.6) of the dummy device (2), which is oriented by the user (U) during the simulated welding process (operative mode).

Particularly, figure 1A shows a marked area wherein the first reference means (2.4) are embodied as reference marks, shown as several dots aligned according to several directions which help positioning the mentioned location and orientation of the tip (2.6).

Another embodiment of the dummy tool (2) with a marked area comprising first reference means (2.4, 2.4') is shown in figure 1B, wherein such marked area is embodied as a solid element (2.8) or holder, protruding from the body of the dummy tool (2). Such solid element (2.8) is coupled to a structure (6) with four arms, for fastening of the first reference means (2.4, 2.4'). In this case, the structure (6) resembles a mill-like configuration, and the first reference means (2.4, 2.4') thereof help positioning the mentioned location and orientation of the tip (2.6) with an additional visual aid for the user, which can physically identify the direction/orientation of the tip (2.6) with regard to a fixed reference in the scene (second reference means). In this embodiment, the marked area comprise rounded physical targets (2.4), in particular spheres, and cubic physical targets (2.4'). However, other embodiments of the dummy tool (2) may comprise differently-shaped reference means (like physical targets).

In the scope of this invention, the "marked/reference area" would be understood as a region of the dummy tool (2) comprising characteristic features, like physical targets (2.4') or markers (2.4), to ease its recognition by acquiring images of the scene and applying vision-based tracking techniques.

In Figure 1A, according to this embodiment, the solid element (2.8) or holder is attached to the rest of the dummy tool (2) by a bolted joints to allow detaching the solid element (2.8) and replacing the first reference means (2.4, 2.4') of the marked area of the dummy tool (2). However, in other embodiments, the solid element (2.8) is integrated in the same dummy tool (2) as a single piece.

Regarding figure 1C, a different embodiment of the marked area comprising markers (2.4) is shown by means of two solid reference elements which are located one opposite to the other, and aligned with the tip (2.6) according to the direction in which such tip (2.6) is located. This allows the user to physically orientate the tip (2.6) according to specific requirements with a visual aid of the reference elements located in the marked area.

Moreover, the at least one sensor (3) of the industrial robot programming system (1) collects data of the milestones in which the activation trigger (2.2) or the additional buttons (2.3) are activated/deactivated in order to store information of the instants in which the tool (2) is active or performing any action.

Additionally, the at least one sensor (3) can also locate and position the tip (2.6) of the dummy device (2), and collect data during the time instants in which the dummy tool (2) is actually activated, performing a welding operation. This data, in combination with the activation of the activation trigger (2.2) or the buttons (2.3), allows storing a more accurate time frame records for the performance of the simulated welding operation.

Additionally, figure 1C shows a support portion (2.7), located adjacent to the handle (2.1) of the dummy tool (2), which helps the user to maintain the dummy tool (2) in its proper position, as well as carrying its weight when necessary. Particularly, such support portion (2.7) is supported on the chest of the user (U) and provides higher stability of the dummy tool (2) and thus a better position in its operative mode.

The support portion (2.7) in combination with the reference elements and/or marks located at the marked area (2.4) allow the user (U) to handle the tool in a more stable and precise manner, as shown in figure 1D.

Figure 2 shows a schematic view of an embodiment of an industrial robot programming system (1). In this case, the industrial robot programming system (1) comprises a sensor (3) is embodied as a laser tracker, particularly provided at the side of the structure of the system, and a camera (3.1) and provided at the top side of the mentioned structure. Such camera (3.1) and laser tracker (3) are schematically shown in figure 2.

The industrial robot programming system (1) comprises 6 degrees of freedom DoF (like the three Cartesian coordinates X, Y and Z; along with corresponding rotation information about each of Cartesian axes, which will be referred to as "rotX", "rotY" and "rotZ" respectively), and is able to move and rotate in order to collect data with the aforementioned camera (3) and laser tracker (3).

In figure 2 such sensors (3) and one or more cameras (3.1) are connected with the dummy device (2) with dashed lines, also schematically shown, in order to show that data is collected by the sensor (3) from the dummy device (2), handled by the user (U) as in figure 1B.

Thus, such an industrial robot programming system (1) collects data during a simulation of a manufacturing process performed as in figure 1B, wherein a user (U) handles the dummy device (2) of the shown industrial robot programming system (1).

Particularly, the user (U) of figure 1B performs, by means of the dummy device (2) of figure 1A, a simulation of the movements which would be performed by a real device in a real manufacturing process. These simulated movements are detected and stored by the industrial robot programming system (1) of figure 2. The storage means (4) and the processor (5) of the industrial robot programming system (1) are schematically indicated in figure 2, as part of the industrial robot programming system (1). Thus, the data collected by the sensors (3) is processed and stored by means of the processor (5) and the storage means (4).

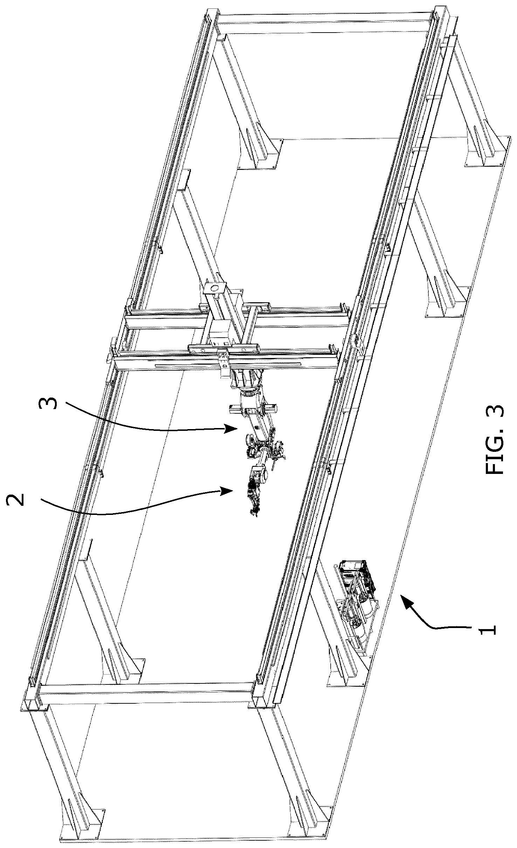

Figure 3 shows a structure in which an alternative embodiment of an industrial robot programming system (1) is performed. In this case, the metallic structure of the image provides support for the installation and movement of an industrial robot (in this case, a robotic arm), which handles a dummy device (2) such as the one of figure 1A.

Several sensors (3) are located along the metallic structure, which allow monitoring the robotic arm whilst a manufacturing process is performed thereof, such as a welding process by means of the robotic arm.

Additionally, during the manufacturing mode, the present robotic arm is able of reproducing the manufacturing process stored by the industrial robot programming system (1).

Moreover, a particular example (Example 1) of a determined manufacturing process is hereby detailed, in order to further show the advantages of the industrial robot programming system (1) of the invention, as well as the method for programming such a system (1).

### Example 1

As indicated throughout the present document, several manufacturing processes are hazardous for operators. This is the case of boat manufacturing, which involves cutting and welding procedures which are very complicated and need to be cost-efficient for operators.

By programming one or more industrial robots with the welding processes needed for the manufacturing of a boat by means of a system (1), such a manufacturing process can become not only more efficient but secure.

The aluminium boat manufacturing system starts in a 3D design from which the necessary aluminum sheets to build the boat geometry are generated. Said aluminium sheets will be cut automatically, either by laser, by water jet, plasma or flame cutting. This whole process is automated.

However, from there it is necessary to setup all the pieces of the boat geometry in a predetermined position and proceed with a manual assembly and joining of such parts. In particular, the welding procedures required for the coupling of such parts are very time consuming, resulting in the 85% of the manufacturing boat time. Such welding processes are complicated processes from the point of view of occupational safety, since they involve exposure to an electric arc of high luminosity, which can cause burns and eye injuries, in addition to generating fumes, so that welders and operators are forced to use complicated individual protection equipment, including among other protective masks with respirators, thick gloves, as well as aprons or coveralls to protect the body from high temperature projections.

By means of the industrial robot programming system (1) of the invention, the dummy device (2) mimics the welding tool used by the welding operators and the system (1) provides with a simulated welding operation (trajectory, etc.) which can be performed by an industrial robot. Once the one or more industrial robots is/ are programmed, such welding operations can be run automatically without human intervention.

When performing a simulated welding operations with such a dummy tool (2) by an operator, the industrial robot programming system (1) is able to store it in storage means (4). Then, the simulated welding operations are transferred to one or more industrial robots which reproduce them in a real welding operation in order to reduce the mentioned time-consuming process, whilst achieving a more accurate performance of the required welds. Thus, the geometrical information obtained by the industrial robot programming system (1) of the invention allows a digital compilation of information including the know-how of the expert operator, thus implementing a successful simulation of the welding process which can be later transferred to a real industrial robot to reproduce certain welding operations according to the instructions it has received.

Depending on the exact welding process to be simulated, several parameters and strategies must be considered for an accurate simulation of a manufacturing process, thus enabling several strategies with the discretization and selection during the operator movement programming. The presence of several buttons and switches in the dummy device (2) of the industrial robot programming system (1) handled by the operator (U) allows to differentiate between programs and strategies. Particularly, the operator is able to mark the initial and final 3D points which define the specific welding path, stored by means of the industrial robot programming system (1) which recognizes the position and orientation of the dummy device during the operative mode by means of several sensors. Such sensors provide:
- Travel movements between reference points to enable several welding techniques, such that the travel 3D points between different identified positions enable the system to provide a welding path, and
- Welding parameters and operations, such as voltage, current, gas flow, current type, pulse, welding speed, wire feed, stick out, etc., which allow full control on the welding process depending on the material, metal sheet thickness, etc. This provides a more accurate simulation of the manufacturing process as stored by the industrial robot programming system (1).

Additionally, the industrial robot programming system (1) provides means able to simulate a welding process controlling and analyzing parameters as penetration, deposition rate, bead size, bead height and bead width. Once the welding process is simulated and the optimized trajectories of the dummy tool are learned by the system (1), said trajectories are sent to the industrial robot in order to reproduce them in a real welding process.

### Example 2: dummy tool (2) with fiducial markers (2.4)

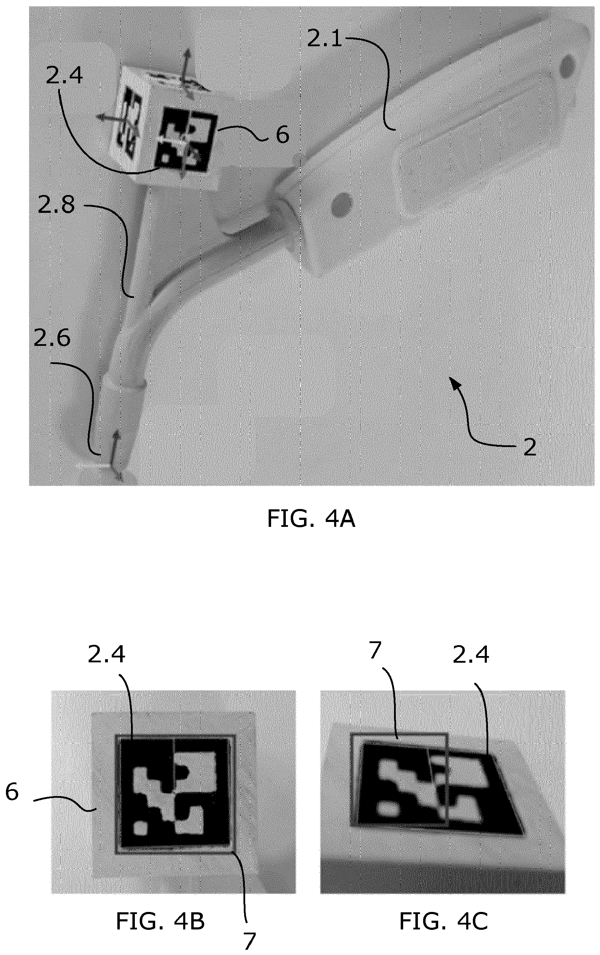

Figures 4A-4C display an embodiment of the dummy tool (2) according an industrial robot programming system (1) of the invention. The position and orientation of the tip (2.6) of said dummy tool (2) can be obtained thanks to a plurality of fiducial markers (2.4) which are placed in a marked area of the dummy tool (2).

In Figure 4A, a solid element (2.8) or holder is embodied as a branch of the main body of the dummy tool (2), and serves for holding a cubic structure (6). A plurality of fiducial markers (2.4) are printed in the surface of said structure (6), at least in some of the faces of said structure (6). In this preferred embodiment, binary (black and white) square fiducial markers (Aruco markers) have been considered because they allow identification of the fiducial marker and also allows to determine position and orientation of said marker. Position by determining a reference point of the fiducial marker and the matrix also determine the orientation, in particular of each side of the frame surrounding the fiducial marker. Advantageously, Aruco markers are design to decrease the risk of misidentifying a marker for another by maximizing the distances between marker matrices. Each fiducial marker (2.4) matrix corresponds to a different identifier or interpretation code (in this case, a binary matrix; in other embodiments, characters or other distinguishable features) which comprises unique information for each of them. Fiducial binary identifiers that are either close to all black or close to all white are avoided, as they can be confused with other objects in the scene.

In this embodiment, square contours of the Aruco fiducial markers (2.4) are considered as reference frames (7), which allow easily identifying the transformation (rotation, translation, etc.) that the fiducial marker (2.4) have undergone, thus computing the position and orientation of the tool depending on the images collected of said fiducial markers (2.4) by the cameras (3.1) of the system (1). It may be highlighted that in this preferred embodiment, the square-shaped fiducial markers (2.4) simplifies the identification of the distortion. In the event of a distortion (rotation, translation of the dummy tool (2)) in the images, the collected fiducial markers (2.4) images are shown exhibiting rectangles or other parallelogram as contours. Therefore it is easy to compute which transformation in 6 DoF (translation, rotation, etc.) has undergone, by reverting it to the original shape.

For instance, multiple 2D projections of the 3D numerical model, each of them with a different rotation and translation (shifting) are compared to the 2D image acquired by a camera (3.1) for each of the fiducial markers (2.4). Rather than matching the entire fiducial marker (2.4) shape, it is enough to match the reference frame (7). In this way, the ideal 3D numerical model of the fiducial marker is aligned with the fiducial marker (2.4) image (as in a registration procedure) until the numerical model matches with the collected image.

Also, a reference frame (7) is defined as the black contour of the fiducial markers (2.4) such that it allows to translate and rotate the particular 6 DoF position of the fiducial marker (2.4) to a final 6 DoF position (final coordinate system) with regard to a reference location of the dummy device (2), like the tip (2.6). When the shape of the reference frame (7) is a square then the transformation from the 4 vertex polygon to a square is easy determining the position and orientation in space.

Then, as the numerical model of the dummy tool (2) is known, it is possible to compute the final 6 DoF position of the dummy tool (2) with regard to a fixed point of the scene (second reference means) since the numerical model comprises information about the shape of the dummy device (2), the position of the tip (2.6) and the position and orientation of the fiducial markers (2.4). Note that the second reference means must be visible in at least some of the images of the scene, in order to establish a positioning and orientation reference between the tip (2.6) of the dummy device (2) and said second reference means.

It is also noted that Figure 4A comprises only a single picture of the scene as collected by a single camera (3.1) (like a monochrome camera) since a single fiducial marker (2.4) allows to determine its location and its orientation and therefore also the location and orientation of the dummy device (2). However, in other embodiments, a plurality of images of the scene is acquired from different points of view and by using different cameras (3.1).

Although the detection of fiducial markers (2.4) works with a single marker detected in at least two different cameras, it is worth underlining that by increasing the amount of fiducial markers (2.4) in the dummy tool (2) as well as by incorporating multiple cameras (3.1) in the system (1), the tracking of the dummy tool (2) is more accurate and robust against perturbances or occlusions. For this reason, the dummy tool (2) of Figure 4A comprises a fiducial marker in each of the six faces of the structure (6) and it is preferably used in an industrial robot programming system (1) comprising multiple cameras (3.1). In that case, the different cameras are synchronized when taking images of the scene, in order to acquire different points of view of the scene at the same time frame.

Moreover, by combining the information of position and orientation coming from multiple fiducial markers on the dummy tool (2), as well as considering the information acquired by several cameras, the resulting 6 DoF position (output of position and orientation of the dummy tool (2)) is more precise. In some embodiments, the 6 DoF position provided by each of the fiducial markers (2.4) is averaged depending on the fiducial markers size in the image and their alignment. All this processing (including the registration of different images acquired with multiple cameras (3.1)) is performed by the processor (5) of the industrial robot programming system (1). Particularly, a shapematching algorithm is applied, as explained in connection with Figures 4B and 4C.

In this specific example a reference point is the centroid of the reference frame. In this specific example it is also not necessary that the cameras are RGB, it is possible to use black and white cameras, although it would also work with RGB cameras.

Figures 4B and 4C correspond to different images of fiducial markers (2.4) acquired by at least two cameras (3.1) during the operation of the user (U) with the dummy tool (2). The method of the invention would take into account both of them through a weighted average in order to determine the 6 DoF position of the dummy tool (2). Figure 4B shows a fiducial marker (2.4) which almost matches a perfect square (mainly squared-shaped reference frame (7) in the detected 2D image. Then, the centroid of the reference frame (7) detected in each image is considered as the reference location. Consequently, the method of the present invention would assign a high weighting factor due to its high degree of parallelism with the perfect shape expected for that fiducial marker (2.4) according to the ideal numerical model.

On the other hand, Figure 4C shows a fiducial marker (2.4) which is mainly distorted (much rotated and which does not fit within the ideal reference frame (7) according to the numerical model), thus it is penalized in terms of weighting factor. In this way, the weighting factor measures the geometric similarity between the detected outline (reference frame (7)) of the fiducial marker (2.4) and the ideal shape of said reference frame (7) according to the numerical model of the fiducial marker (2.4), in this case, a perfect square. The more the marker outline resembles a perfect square, the larger weighting factor is assigned to it. Also, a larger weighting factor would be awarded to a fiducial marker (2.4) image the larger it looks in the acquired images of the scene.

As a possible criterion in certain embodiments of the invention, the weighting factors (score) can be a normalized value in the range 0-1.

For example, in the case of having a single fiducial marker (2.4) in multiple images of the scene (as in Figures 4B-C), and according to this normalization, the sum of the weighting factors given to the images associated with the same first reference means is 1, that is, weighting factors are normalized. For instance, if the markers from Figures 4B-4C would correspond to the same marker acquired in the same time frame available to compute the reference coordinate system, then the coordinate system determined by the marker from Figure 4B must receive a weighting factor much larger (i.e., 0.7) than the fiducial marker from Figure 4C, as the latter does not seem reliable enough.

In other embodiments, multiple fiducial markers (2.4) are tracked simultaneously in several images. In this way, the weighted average takes into account the size, orientation and whether the recovery of each of these fiducial markers (2.4) is complete or not in order to assign different weighting factors.

In this way, these weighting factors determine the relevance awarded to the 6 DoF position of the dummy tool (2) derived from each fiducial marker (2.4).

As a summary, for each time frame, the different 6 DoF positions obtained by the several fiducial markers (2.4) are computed. Then, at each time frame, a unique 6 DoF position is assigned as the (weighted) average of the coordinate systems determined by several fiducial markers (2.4). The outcome of this processing is provided as a final 6 DoF position of the dummy tool (2) with regard to the fixed second reference means in the scene. For instance, an outcome can be the list of 6 DoF positions representing the trajectory of the dummy tool (2), or at least a reference location of it (like the tip (2.6). In this lists of positions, the information regarding the time frame is also embedded as a timestamp, therefore, speed of the dummy tool (2) can be computed.

Finally, it is worth pointing out that this approach also addresses the problem of occlusions, that some of the fiducial markers (2.4) are not visible in certain points of view of the scene, or even if the fixed reference point in the scene (second reference means) is blocked by another object of the scene in certain points of view. In that case, the redundancy implemented as increasing the number of cameras (minimum 2 cameras) and the amount of fiducial markers (2.4) in the dummy tool (at least 1 marker) alleviates the occlusion problem.

### Example 3: dummy tool (2) with physical targets (color and shape physical targets)

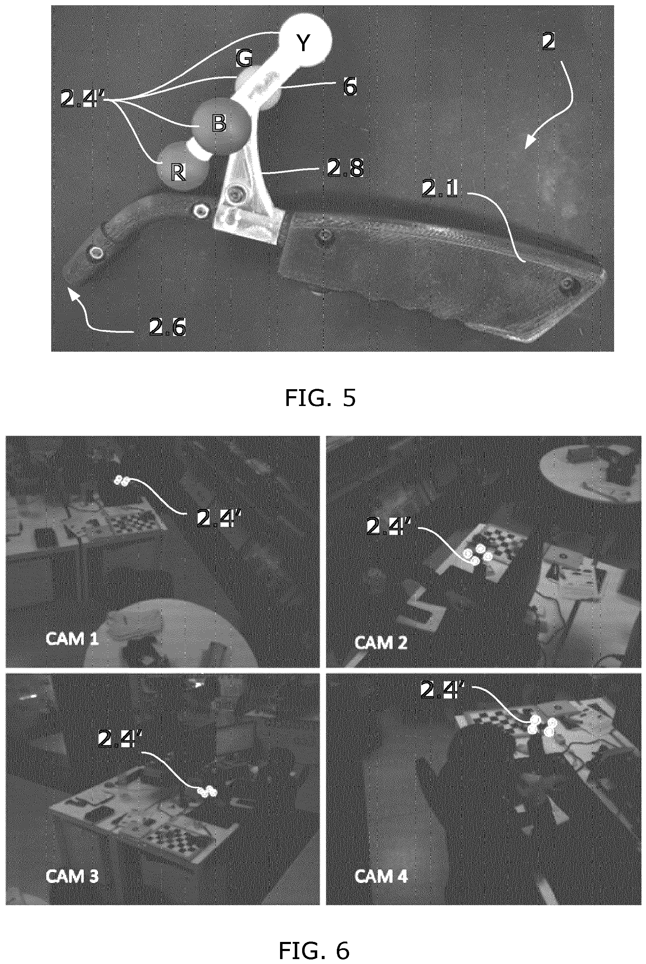

In the following example (see Figure 5), the dummy tool (2) is equipped with at least more than two different color physical targets. Particularly, four rounded physical targets (2.4') having different colors (red R, yellow Y, green G and blue B) are considered. Each color allows to identify each of the physical targets uniquely. This physical targets (2.4') are coupled to the body of the dummy tool (2) by means of a solid element (2.8) attached to a structure (6) with a plurality of arms for fastening said physical targets (2.4'). The coupling between the dummy tool (2) and the physical targets (2.4') can be permanent or detachable (by using fastening means such as grapes, etc.), as previously explained with regard to the embodiment of Figure 1B. For instance, the coupling shown in Figure 5 is based on a bolted joint. A user (either human or robotic) may manipulate the dummy tool (2) handling it by means of the handler (2.1).

In addition of the dummy tool (2), the industrial robot programming system (1) comprises a plurality of RGB cameras (in this case, 4 RGB cameras such that they acquire four different perspectives of the scene in which the operation of the user (U) takes place. The RGB cameras are calibrated in advance (by any state of the art method) and synchronized each other and with the processor (5) of the industrial robot programing system (1). It has also been indicated that, as the physical targets (2.4') are color coded, the use of a RGB camera is essential, whereas the fiducial markers (2.4) approach is compatible with monochrome cameras.

The operation (e.g., a manufacturing process) simulated by the user (U) is carried out in a scene, and it is recorded by the at RGB cameras. Then, by considering the information collected by said cameras, the trajectory of the dummy tool (2) is obtained as a list of 6 DoF (degree of freedom) positions, which in turn refer to the 3D Cartesian coordinates as well as the rotation about each of the Cartesian axes. As the numerical model of the dummy tool (2) is known a priori, it is sufficient to know the position of the reference locations (in this case, centroids of each physical target (2.4') to determine the 6 DoF position of the entire dummy tool (2) during the operative mode. Once the images of the scene are acquired from multiple RGB cameras and labelled with a time frame value (timestamp corresponding to the time frame in which the image is collected).

The numerical model of dummy tool (2) is calibrated prior to the execution of the method of the invention, which means that the shape, dimensions and color information of the dummy tool (2) and the first reference means (2.4, 2.4') are fully characterized. For instance, in this embodiment, the distance between the different physical targets (2.4') is calibrated and the distance between the cameras and the second reference means (at least, it must be known at the initial time frame), as well as the intensity RGB (color) values of the physical targets (2.4') are previously known. Unlike in the previous "Example 2" involving fiducial markers, in this case the orientation information cannot be derived from a single physical target (2.4'), due to its rounded shape. For this reason, at least three physical targets (2.4') are required to triangulate the 6 DoF position of the dummy tool (2). In this case, the fourth physical target (2.4') provides redundancy to overcome eventual occlusions.

In this particular embodiment of the method, of the invention the shape-based matching algorithm takes into account that the physical targets (2.4') illustrated in Figure 5 are spherical. In this way, the matching algorithm tries to find full circles (2D projections of the spherical physical targets (2.4') in the collected images). However, this shape-based matching algorithm (and the similarity measurement) is sensitive to the known 3D numerical model (known geometrical information) the physical target (2.4'), such that it is adapted to find them in the acquired images of the scene. Other suitable similarity measurements are cross-correlation, sum square difference or any known image descriptor known by the expert in the field (like scale-invariant feature transform, SIFT, sensitive to the shape).

The physical targets (2.4') are detected in each of the images of the scene from different points of view (from different cameras), as shown in Figure 6. The shape-based matching algorithm compares the detected contours of the physical targets (2.4') and matches them with the calibrated 3D numerical model, which is predetermined. According to this embodiment, the physical targets (2.4') are spherical, therefore they are captured in 2D images as circles. Moreover, in this embodiment the rotation would not be relevant, due to symmetry of the physical targets (2.4').

In this case, the computation of the reference locations of the dummy tool (2) comprises a weighted average of the reference locations based on multiple points of view (images). The more the contours of detected physical targets (2.4') in the images resemble full circles, the largest weighting factor they are assigned. Partial circles or images where a certain physical target (2.4') does not appear receive a weighting factor penalty. Finally, the reference locations are computed as the centroids of each physical target (2.4'). In a preferred embodiments, the weighting factors can be normalized to the range 0-1, and those incomplete physical targets (2.4') are neglected or assigned a low weighting factor (close to 0).

As an outcome, the trajectory of the dummy tool (2) is obtained as a list of 6DoF positions of the reference locations, centroids of the physical targets (2.4')) labelled with their corresponding timestamp and, the orientation computed using triangulation of at least three centroids. The trajectory of the dummy tool (2) is recorded during the entire operation, the manufacturing or industrial process simulated by the user by means said dummy tool (2), namely during the operative mode. Said 6DoF positions represent the distance between reference locations of the dummy tool (2) (in this case, the centroids of each of the physical targets (2.4')) and a second reference means embedded in the scene, for instance, an object in the scene which is always present regardless the particular point of view collected by the cameras.

As happened with the fiducial markers (2.4) approach, occlusions may arise by using the physical targets (2.4'). To minimize the disadvantages linked to said occlusions, redundancy is implemented by means of multiple cameras (at least two cameras) and a larger amount of physical targets (2.4') in the dummy tool (2).

Finally, it is worth pointing out that the approach with fiducial markers (2.4) can be combined with the physical targets (2.4'). This combination would lead to a more complex tracking of the dummy tool (2), however, the redundancy would be significantly larger and the occlusions could be effectively overcome.

### Example 4: Processing of the collection data of position of the dummy tool (2) during the operative mode

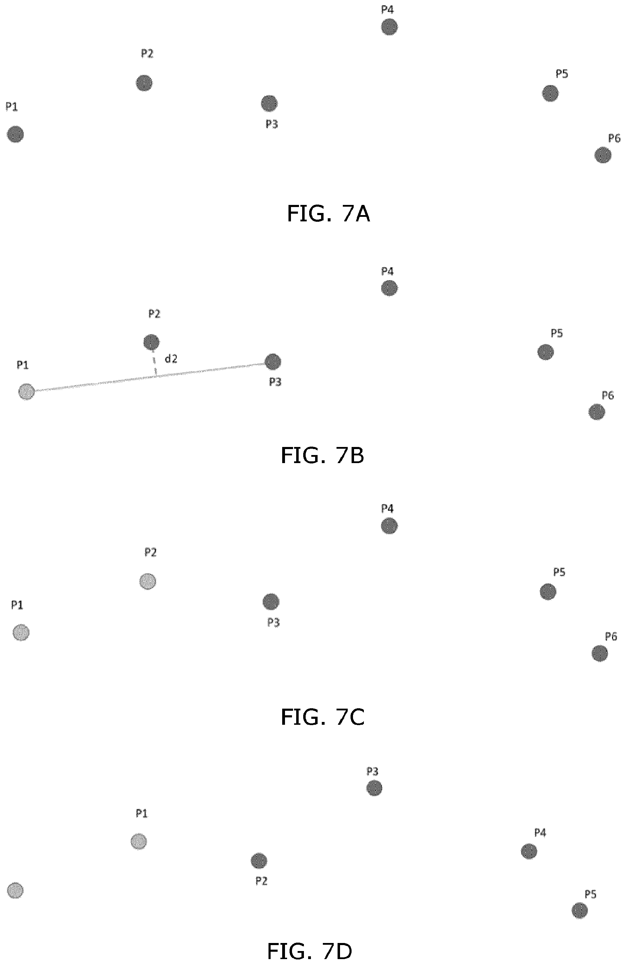

Figures 7A-7H illustrate an example showing how the processing of the collected data of position and/or orientation of the dummy tool (2) takes place. In the sake of simplicity, in this example only position of the dummy tool (2) is considered, thus the collected data correspond to the trajectory/path traveled by the dummy tool (2) when it is operated by the user (U) to carry out an industrial process. However, when reference is made to a point, it is understood that the point is linked to more data such as orientation (6 DoF), timestamping, or others that may enrich the amount of information related to that point.

Let us assume that the collected data are sorted by acquisition time frame, for instance, by including a timestamp or another time information. Each point of the collected data (or sequence) corresponds to a 6 DoF position of the dummy device (2) at a certain time and labelled with a timestamp.

Then the processing involves an optimization algorithm for reducing the amount of collected data, the optimization algorithm comprising the following steps:
I.1) Providing a list *Pᵢ*, *i* = 1 ... *n* of the collected data, wherein the list is sorted according to the acquisition order and wherein initially all points of the list are considered as not selected, as illustrated in Figure 7A with the list of points P1-P6, being n=6 (total points in the trajectory traveled by the dummy tool (2)). Note that in Figure 7A all points P1-P6 are colored in dark gray to underline that they are "not selected points". Later, in Figures 7B-7F, the so-called selected points will be colored in light gray.
I.2) Presetting of a threshold distance *dₜₕ*, by using a priori knowledge of the skilled person or another technique. This threshold distance is an input for the algorithm.
I.3) For each point *Pᵢ* of the list, and following the list order, carrying out the following steps iteratively:
   - assigning *Pᵢ* as a selected point;
   - for the points j=i+2 and following,
      o determining a line *rⱼ* passing through the points *Pᵢ* y *Pⱼ*
      o for one or more list points *Pₖ* between *Pᵢ* y *Pⱼ*, namely *k* ∈ [*i* + 1, *j* - 1], computing a distance between *Pₖ* and *rⱼ*, and
         if the distance is below the threshold distance *dₜₕ*, discarding the point *Pₖ*; otherwise, if the distance is larger than the threshold distance *dₜₕ*, the point *Pₖ* is assigned as a selected point;
         until at least a point *Pₖ* is assigned as a selected point;
   - assigning *Lⱼ*, which is the end point of the updated line *rⱼ*, as a selected point;
   - updating the value of *i* as *i* = *j*;
I.4) returning a new list comprising the selected points sorted according to the acquisition order.

Previous step I.3) is better explained by considering the sequence illustrated in Figures 7B-7H, where it is detailed how the optimization algorithm analyze the points of the trajectory and compute which points are selected and which points are dropped, based on the distance to specific straight lines. Dark circles represent non-selected points and light circles represent selected points.

In Figure 7B, point P1 is initially marked as a selected point, light gray, and the straight line passing through P1 and P3 is computed. Then, the distance from P2 to said line is calculated (denoted as d2). In this example the straight-line or Euclidean distance is applied. Afterwards, it is checked whether d2 is larger than a threshold distance or not. If d2≥ *dₜₕ*, then P2 is considered as a selected point and is preserved (for instance stored by the processor (5) in the storage means (4)), as shown in Figure 7C.

Otherwise, in the case any point is considered as selected (see Figure 7D), then the initial point (P1) is stored and the next point (P2) is considered as the new starting point and, according to this description, renamed as new P1 (see Figure 7D). In that case, the optimization algorithm would start again by using new P1 as the new starting point.

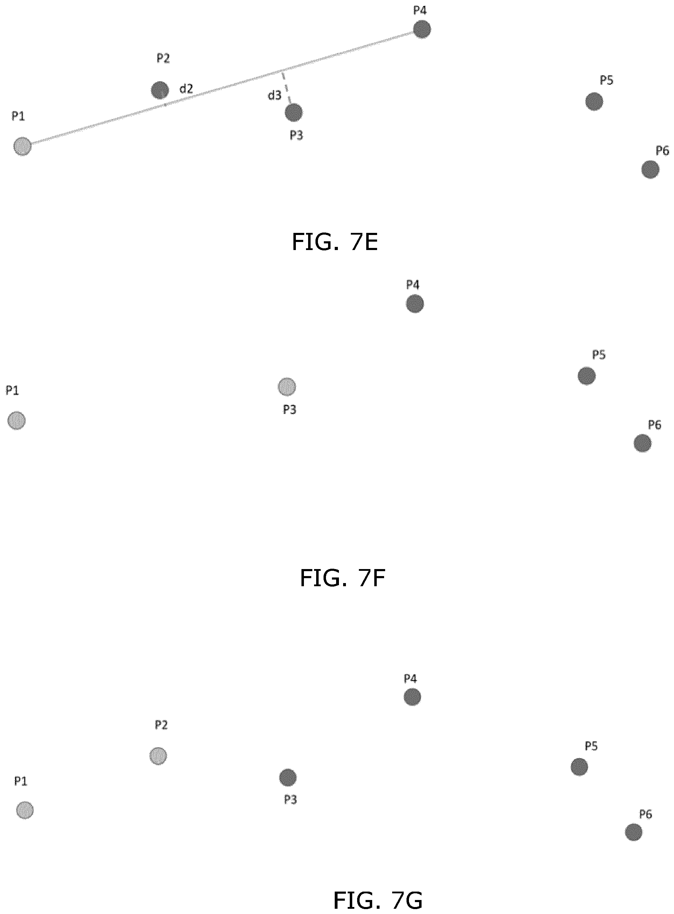

Let us consider the case of Figure 7E, in which the distance d2 is small enough to be lower than the threshold distance, that is to say, d2≤ *dₜₕ.* In that case, the next point P4 of the collected data are considered, and a straight line is defined between the initial point (P1) and the end point (P4), while P2 and P3 are intermediate points. In that case, distance d2 is computed as the distance from P2 to the straight line passing through P1-P4. Similarly, distance d3 is computed as the distance from point P3 to the same line, as shown in Figure 7E.

Starting from the situation in Figure 7E, if d3≥ *dₜₕ*, P3 is considered a selected point and it is stored, while P2 is removed as the distance d2 is too small to be considered significant. This is illustrated in Figure 7F. In this example, only P2 is discarded, however, in general all the points from the last selected point are deleted since they have a distance to the line smaller than the predetermined threshold value and, if the comparison has progressed several points, it is because all of them had this smaller distance.

A different situation is displayed in Figure 7G, wherein it turns out that d3 ≤ *dₜₕ* while d2≥ *dₜₕ.* In that case, point P2 is considered a selected point.

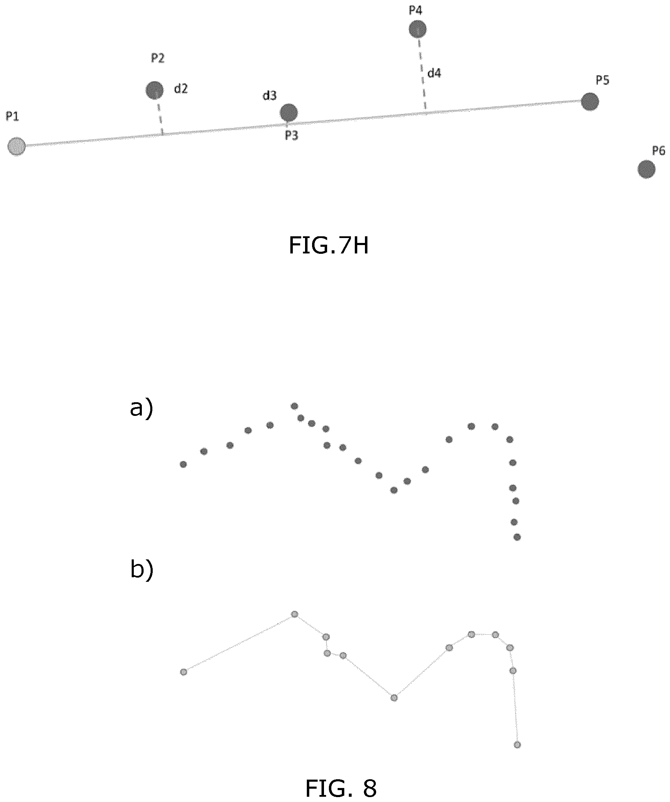

Another possible scenario is shown in Figure 7H, wherein simultaneously d2≤ *dₜₕ* and d3≤ *dₜₕ.* In that case, the procedure considers the following point of the collection (P5) and computes the straight line between P1 and P5. Furthermore, distances d2, d3 and d4 are calculated as the distances between intermediate points P2, P3 and P4 and the new straight line joining P1 and P5. Again, it is verified whether d4 is larger than the threshold distance or not and the procedure would continue.

The procedure continues following the steps 1.3 until the last point of the collected data (in this case, P6) is reached.

It is worth pointing out that the initial and final points of the trajectory are always considered as "selected points", thereby they are preserved in the simplified trajectory obtained by the industrial programming system of the invention.

By following the procedure described in Figure 7, an initially complex trajectory (see Figure 8A) can be simplified to obtain a computationally more friendly version (see Figure 8B), which eases the task of programming a robot device to reproduce it, which in turn produces other benefits such as a greater robustness against small unwanted movements (vibrations) as well as less stringent storage requirements in the robot device where the optimized trajectory instructions are loaded (such that the robot device is programmed to carried out the simplified path).

As a summary of the previous optimization procedure, the output is a linear piecewise approximation of the trajectory followed by the dummy tool (2). Advantageously, this new list of selected points represent with high accuracy the original path followed by the dummy tool (2) but requires less computational storage. Other connecting lines like splines may be used on the new reduced set of points.

## Claims

1. Industrial robot programming system (1) for the programming of an industrial robot, **characterized in that** it comprises:
- a dummy device (2), configured as a real tool to be handled by a user (U) in an operative mode, i.e., performing a simulation of one or more real operations that would be executed during a manufacturing process;
- at least one sensor (3), configured for collecting data of the position and/or the orientation of the dummy device (2) in a scene;
a processor (5) in communication with the at least one sensor (3) and with the storage means (4);
wherein the processor (5) is configured to read collected data of the at least one sensor (3) while the dummy device is handled by the user (U) and to store it in the storage means (4);
and wherein the processor (5) is configured to perform the following steps:
a) collecting a time frame record comprising the position and/or orientation from the at least one sensor (3) of the dummy device (2) in a starting position during the operative mode,
b) collecting data of a set of time frame position and/or orientation records from the at least one sensor (3) of the dummy device (2) according to a path of the dummy device for a pre-specified period of time
c) programming the industrial robot by means of the collected data.

2. A system (1) according to the previous claim, wherein the processor (5) is further adapted to receive at least one event while collecting data in step b) and wherein the collected data are enriched with the record of the event, in particular triggering events caused by the user (U) operating on an activation trigger (2.2) and/or one or more buttons (2.3).

3. A system (1) according to any of the preceding claims, wherein the processor (5) is configured to collect the data in real time.

4. A system (1) according to any of the preceding claims, further comprising filters which reduce the perturbances and/or the collected data.

5. A system (1) according to any of the preceding claims, wherein the dummy device (2) comprises first reference means (2.4, 2.4') disposed on a marked area of the dummy device (2).

6. A system (1) according to any of the preceding claims, further comprising at least one second reference means in a fixed position in the scene.

7. A system (1) according to any of the preceding claims, which further comprises a plurality of cameras (3.1), each of said cameras (3.1) being configured to acquire a plurality of images of the scene from a different point of view; said images comprising one or more of the first reference means (2.4, 2.4') and/or the second reference means; and wherein the cameras (3.1) are synchronized by the processor (5).

8. A system (1) according to any of the preceding claims 5-7, wherein the first reference means comprise one or more fiducial markers (2.4).

9. A system (1) according to any of the preceding claims 7-8, wherein the first reference means comprises at least three physical targets (2.4') for artificial vision tracking located on the dummy device (2), and wherein the cameras (3.1) comprise at least two synchronized cameras (3.1) configured for acquiring images of the scene from at least two different points of view.

10. A system (1) according to the any of the preceding claims 8-9, wherein each of the at least three physical targets (2.4') have a different RGB value allowing to identify each physical target (2.4'), and wherein the cameras (3.1) comprise at least two synchronized RGB cameras.

11. Industrial robot programming method for the programming of an industrial robot programming system (1), the system (1) comprising:
- a dummy device (2), configured as a real tool to be handled by a user (U) in an operative mode;
- at least one sensor (3), configured for collecting data of the position and/or the orientation of the dummy device (2) in a scene;
- a processor (5) in communication with the at least one sensor (3) and with the storage means (4);
herein the method comprises the following steps:
a) collecting a time frame record comprising the position and/or orientation from the at least one sensor (3) of the dummy device (2) in a starting position during the operative mode,
b) collecting data of a set of time frame position and/or orientation records from the at least one sensor (3) of the dummy device (2) according to a path of the dummy device (2) for a pre-specified period of time,
c) programming the industrial robot by means of the collected data.

12. A method according to the preceding claim, wherein the method further comprises receiving at least one event while collecting data in step b) and wherein the collected data are enriched with the record of the event, in particular triggering events caused by the user (U) operating on an activation trigger (2.2) and/or one or more buttons (2.3).

13. A method according to any of the preceding claims 11 or 12 wherein in step b), the collected data are acquired by a continuous tracking of the position and/or orientation of the dummy device (2).

14. A method according to any of the preceding claims 11-13, wherein the system (1) is according to any of claims 7-10, wherein collecting data comprises the realization of the following steps for each time frame:
- acquiring a plurality of images collected by the cameras (3.1) synchronized to capture the images in the same time frame, the cameras (3.1) adapted to capture the scene observed from different points of view and, the dummy device (2) located in the scene wherein at least one of the first reference means (2.4, 2.4') are within the field of view of at least one camera (3.1);
- detecting first reference means (2.4, 2.4') in at least one image;
- for each first reference means (2.4, 2.4') in each image, determining a reference location associated to the first reference means (2.4, 2.4').

15. A method according to the preceding claim, wherein
- each camera (3.1) of the set of cameras is adapted to capture an RGB image;
- the processor (5) comprises a numerical model comprising information on the shape, color and location of one or more 3D physical targets (2.4'), the theoretical shape of the contour of the 3D physical target when shown in an image and, the location of the 3D physical targets (2.4') in respect to a reference of the dummy device (2);
wherein determining a reference location associated to the first reference means (2.4') comprises:
- detecting RGB values of the physical targets (2.4') shown in the image and determining the set of pixels associated to the said physical targets (2.4') by performing a clustering of pixels corresponding to one RGB value of the numerical model,
- determining a contour for each physical target (2.4');
- for each physical target (2.4'), locating the corresponding theoretical shape of the contour of the 3D physical target (2.4') of the numerical model in the image in order to match with the contour determined in the previous step and;
- determining the reference location of each physical target (2.4') as the centroid of the contour of the located theoretical shape of the contour of the 3D physical target (2.4') in the image.

16. A method according to previous claim, wherein the orientation of the dummy device (2) is determined by means of a triangulation algorithm using at least three different reference locations of the at least three 3D physical targets (2.4') determined by at least two images of the same time frame.

17. A method according to claim 14, wherein
- the processor comprises a numerical model comprising information on the shape, location and orientation of one or more fiducial markers (2.4), in particular the shape, location and orientation of a reference frame (7) of the fiducial marker (2.4), in respect to a reference location of the dummy device (2);
wherein determining the reference location associated to the first reference means (2.4) comprises:
i. detecting the reference frame (7) of the fiducial marker (2.4);
ii. identifying the fiducial marker (2.4) associated to the reference frame (7);
iii. for each fiducial marker (2.4), locating and transform the corresponding theoretical shape of the reference frame (7) in the image in order to match with the detected reference frame (7) of the fiducial marker in step i) and;
iv. determining the reference location as the centroid of the contour of the reference frame (7) in the image and the orientation responsive to the transformation of the theoretical shape of the reference frame (7).

18. A method according to the preceding claims 16 or 17, wherein the reference location of one first reference means (2.4, 2.4') being estimated by two or more images is determined as a weighted average wherein the weighting factors associated to reference locations with larger size of the first reference means (2.4, 2.4') shown in the image have higher values.

19. A method according to the preceding claim, wherein, if the first reference means is a fiducial marker (2.4), then the weighting factor associated to reference locations with a reference frame (7) less distorted in the image have higher values.

20. A method according to any of the preceding claims 18 or 19, wherein the first reference means are physical targets (2.4') and the weighted average determining the reference location reduces the weighting factor of reference locations determined in images where the first reference means are partially shown.

21. Industrial robot programming method according to any of claims 18-20, after the step b), the method further comprises the following steps for reducing the amount of collected data:
I.1) providing a list *Lᵢ*, *i* = 1 ... *n* of the collected data, wherein the list is sorted according to the acquisition order and wherein initially all points of the list are considered as not selected;
I.2) presetting of a threshold distance *dₜₕ*;
I.3) for each point *Lᵢ* of the list, and following the list order, carrying out the following steps iteratively:
- assigning *Lᵢ* as a selected point;
- for the points *j* = *i* + 2 and following,
o determining a line *rⱼ* passing through the points *Lᵢ* y *Lⱼ*
o for one or more list points *Lₖ* between *Lᵢ* y *Lⱼ*, namely *k* ∈ [*i* + 1, *j* - 1], computing a distance between *Lₖ* and *rⱼ*, wherein
if the distance is below the threshold distance *dₜₕ*, discarding the point *Lₖ*; otherwise *Lₖ* is assigned as a selected point; until at least a point *Lₖ* is assigned as a selected point;
- assigning *Lⱼ*, which is the end point of the updated line *rⱼ*, as a selected point;
- updating the value of *i* as *i* = *j*;
I.4) returning a new list comprising the selected points sorted according to the acquisition order.

22. Computer program comprising instructions which, when the program is executed by a computer, cause such computer to carry out the steps b) and/or c) of the method of any of claims 11 to 21.

23. A computer-readable data carrier having stored thereon the computer program of the preceding claim 22.
